# EUROPEAN PATENT APPLICATION

(11) **EP 0 997 178 A1**
(43) Date of publication of application: **03.05.2000**
(21) Application number: 99308569.5
(22) Date of filing: 28.10.1999
(51) Int. Cl.: B01D 3/00

(54) **A liquid distributor for a distillation column**

(30) Priority: 30.10.1998 US 183563
(71) Applicant: THE BOC GROUP, INC., Murray Hill, New Providence, New Jersey 07974-2082 (US)
(72) Inventor: Potthoff, Richard W., Scotch Plains, New Jersey 07076 (DE)
(74) Representative: Wickham, Michael

(57) **Abstract**

A liquid distributor for feeding liquid to a distillation column has a feed distributor with a body 10 sized to extend across the liquid distributor 6 and an inlet defined in the proximal end thereof. Feed passageways 18 and 20 are also provided within the body 10 and are sized to extend between the ends of the body 10. The passageway(s) 18 and 20 have elongate perforate walls 24 and 22 respectively configured to discharge the liquid across the liquid distributor. Each passageway has a taper configured to promote a constant liquid velocity within the passageway. As a result, a uniform liquid distribution of the liquid out of the elongate outlet and therefore to the liquid distributor is also promoted.

## Description

The present invention relates to a liquid distributor housed within a distillation column for distributing liquid to the distillation column.

Distillation columns can be provided with various types of packing that are arranged in beds along the length of the distillation column. The packing is used to bring liquid and vapor phases of the mixture to be separated into close physical contact. In conducting a distillation process, it may be necessary to feed liquid to one or more locations of the column. Such liquid is fed into the column by a feed distributor that in turn feeds a liquid distributor. The liquid distributor functions to distribute liquid to the next underlying bed of packing.

In order for a distillation column to properly function, it is necessary that any liquid distributed to a bed of packing remains well mixed so that its concentration across the column is relatively constant. In order to ensure consistency, the feed distributor is designed to feed liquid across the liquid distributor. Often, such feed distributors are in the form of pipes with openings in the bottom. The inventors herein have found that such feed distributors preferentially feed more liquid at the far end of the pipe and less liquid at the inlet end of the pipe. This tends to produce mal-distributions of liquid in a transverse direction of the column. As a result, the concentration of liquid can vary across the column to yield a fall-off in expected performance.

As will be discussed, the present invention provides a feed distributor that promotes uniform liquid distribution from the liquid distributor along the length thereof.

In its broadest aspect, the invention provides a feed distributor in which at least one elongate tapered passageway having a perforate side wall receives the liquid to be distributed, the passageway tapering from its proximal to its distal end. The taper is arranged to promote a constant liquid velocity along the passageway.

In a preferred embodiment, the feed distributor has a body (in the form of a trough) sized to extend across the liquid distributor. The trough has first and second ends, an inlet defined in the first of the ends, and at least one passageway sized to extend between the first and second ends. The passageway has an elongate outlet configured to discharge the liquid across the liquid distributor. Additionally, at least one passageway has a taper taken in a direction from the first to the second of the ends to promote a constant liquid velocity within the passageway and therefore, a uniform liquid distribution of the liquid out of the elongate outlet along the length thereof and to the liquid distributor.

Distributors and distillation columns according to the invention will now be described by way of example with reference to the accompanying drawings, in which:
Figure 1 is a fragmentary view of a distillation column with portions broken away illustrate the placement of a feed distributor in accordance with present invention;
Figure 2 is a top view of the feed distributor illustrated in Figure 1;
Figure 3 is a sectional view of the feed distributor illustrated in Figure 2 taken along lines 3-3 thereof; and
Figure 4 is a top plan view of an alternative embodiment of a feed distributor of the present invention.

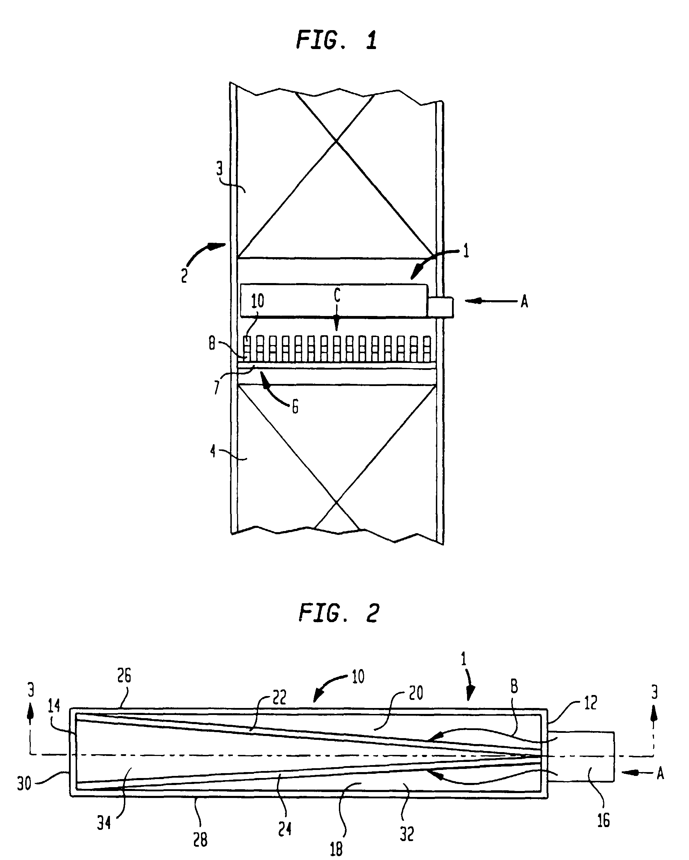

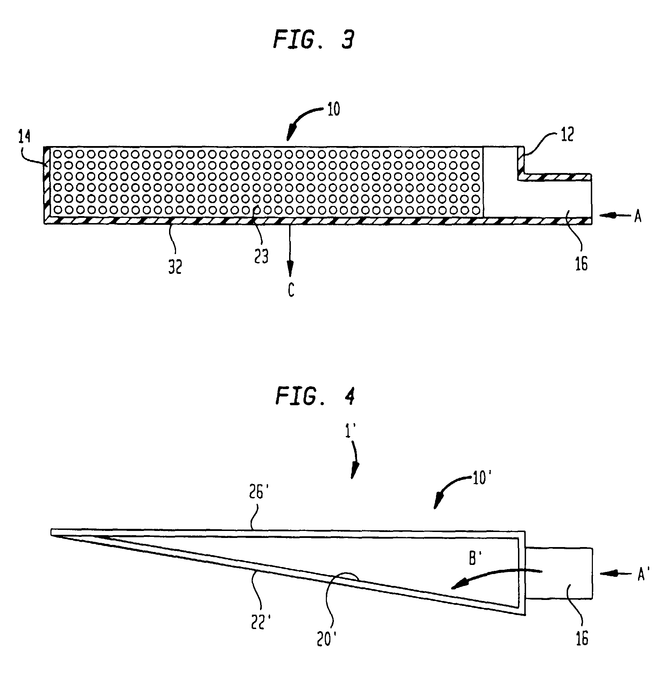

With reference to Figures 1 and 2, a feed distributor 1 in accordance with the present invention is illustrated as being located within a distillation column 2 between beds 3 and 4 of random or structured packing. The liquid is fed into feed distributor 1 as indicated in Figure 1 by arrowhead A and is discharged to a liquid distributor 6 in a direction shown by arrowhead C.

Feed distributor 1 has a body (or trough) 10 sized to extend (diametrically) across liquid distributor 6. The body 10 has a first (proximal) and 12 and a second (distal) end 14. An inlet 16 is defined at the first end 12 to passageways 18 and 20 extending between first and second ends 12 and 14. Each of the passageways 18 and 20 has two sides and one of the two sides of each of passageway 18 and 20 is formed by perforate side walls 22 and 24, respectively. Liquid, as previously stated, enters feed distributor 1 in the direction of arrowhead A. Thereafter, the liquid flows along passageways 18 and 20 then out of perforate side walls 22 and 24. Side walls 22 and 24 serve as elongate outlets configured to discharge the liquid along the length of body 10 and therefore across liquid distributor 6 (along a line coplanar with a vertical plane containing a diameter of the liquid distributor 6).

The opposite sides of passageway 18 and 20 are formed by imperforate side walls 26 and 28, respectively, which are joined by an end wall 30. A base wall 32 is provided with a central cutout 34. Central cutout 34 is laterally defined by perforate side walls 22 and 24 to produce an open area from which liquid flows from perforate side walls 22 and 34 in the direction of arrowhead C.

Each of passageways 18 and 20 is provided with a taper taken in the direction from first end 12 to second end 14. The second end 14 can be sized so that perforate side walls 26 and 28 slant towards one another to enhance the degree of taper. The taper promotes a constant liquid velocity in passageways 18 and 20 at a variety of liquid flow rates. As a result, a uniform liquid distribution of liquid out of side walls 22 and 24 is also promoted as well a uniform distribution across liquid distributor 6. It is to be noted that liquid distributor 6 is a type that is provided with an apertured plate 7, vapor risers 8 and hats 10 to collect liquid and distributed onto plate 7. However, no particular form of a liquid distributor is preferred.

With additional reference to Figure 4 an alternative embodiment of a feed distributor in accordance with the present invention is illustrated by reference numeral 1' in which a single passageway is provided. To this end, feed distributor 1' has a body or trough 10', a passageway 20' including a perforate side wall 22 and an inperforate side wall 26. Liquid enters through inlet 16' and flows out of the elongated outlet formed by perforate side wall 22.

## Claims

1. A liquid distributor for a distillation column having at least one elongate tapered passageway for receiving the liquid to be distributed, the passageway having an elongate perforate side wall and the passageway tapering from its proximal to its distal end.

2. A feed distributor for feeding liquid to a liquid distributor, said feed distributor comprising:
a body sized to extend across said liquid distributor;
said body having, first and second ends, an inlet defined in said first of said ends, and at least one passageway sized to extend between said first and second ends and having an elongate outlet sized to discharge said liquid across said liquid distributor; and
said at least one passageway having a taper in a direction taken from said first to said second ends to promote a constant liquid velocity within said passageway and, therefore, a uniform liquid distribution of said liquid out of said elongate outlet along the length thereof to said liquid distributor.

3. A feed distributor according to claim 2, wherein said at least one passageway has two opposed sides and one of said two sides is formed by a perforate sidewall to also define said elongate outlet.

4. A feed distributor according to claim 3, wherein:
said elongate body has two passageways; and
the respective perforate sidewalls being located opposite to one another and being angled towards one another in the direction of the inlet.

5. A liquid distributor according to claim 1, in which the passageway is in plan view of triangular shape.

6. A liquid distributor according to claim 1 in which the passageway is in plain view of right-angled triangular shape, the elongate perforate side wall providing the hypoteneuse of the triangle.

7. A distillation column including a liquid distributor according to claim 1, claim 5 or claim 6.
